# EUROPÄISCHE PATENTSCHRIFT

(11) **EP 0 919 512 B1**
(45) Veröffentlichungstag und Bekanntmachung des Hinweises auf die Patenterteilung: **03.05.2006**
(21) Anmeldenummer: 98119483.0
(22) Anmeldetag: 15.10.1998
(51) Int. Cl.: B66D 1/12, B66D 1/22

(54) **Seilwinde mit flüssigkeitsgekühltem Elektromotor**
Winch with a liquid-cooled electromotor
Treuil avec électromoteur refroidi par un liquide

(30) Priorität: 24.11.1997 DE 19752003
(43) Veröffentlichungstag der Anmeldung: 02.06.1999
(73) Patentinhaber: Zollern GmbH & Co. KG, 72517 Sigmaringen-Laucherthal (DE)
(72) Erfinder: Felder, Winfried, 88326 Aulendorf (DE); Wolf, Jürgen, Dr., 38855 Wernigerode (DE)
(74) Vertreter: Schwabe - Sandmair - Marx

(56) Entgegenhaltungen:
- CH-A- 338 578
- DE-A- 2 538 561
- DE-A- 4 411 055
- DE-A- 4 433 059
- DE-U- 1 911 195

## Beschreibung

Die vorliegende Erfindung bezieht sich auf eine Winde, insbesondere eine Seilwinde mit einem flüssigkeitsgekühlten Elektromotor.

Allgemein sind verschiedene Arten von hydrostatisch betriebenen Winden bekannt.

Es sind weiterhin verschiedene Arten der Anordnung einer Seilwinde mit einem Elektromotor bekannt. Üblicherweise werden elektromotorische Antriebe für Seilwinden nur in Verbindung mit großen Stirnradgetrieben eingesetzt. Dabei wird das Stirnradgetriebe aus Platzgründen verwendet, damit der Elektromotor parallel zur Seiltrommel in einer sogenannten "U-Form" angeordnet werden kann. Diese U-förmige Anordnung ist jedoch aufgrund des großen Platzbedarfs nachteilig.

Es ist auch bekannt, Planetengetriebe zu verwenden, welche in der Seiltrommel angeordnet sind. Jedoch wird der koaxial angeordnete ausreichend starke Elektromotor zum Heben großer Lasten zu groß, so daß er in der Praxis nicht innerhalb der Seiltrommel angeordnet werden kann. Somit ergibt sich eine Gesamtlänge, die in der Praxis aufgrund des großen Platzbedarfs Schwierigkeiten bereitet bzw. nicht anwendbar ist.

Eine weitere bekannte Alternative ist die Verwendung einer Kombination aus einem Planetengetriebe zusammen mit einem Winkelgetriebe, so daß die Gesamtanordnung zusammen mit dem Elektromotor eine sogenannte "L-Form" aufweist. Auch hier ist der hohe Platzbedarf nachteilig.

Weiterhin ist eine Elektrowinde mit einem in der Trommel angeordneten Einbau-Bremsmotor und einem in einem Ölbad laufenden Planetengetriebe bekannt. Dabei wird ein pohamschaltbarer Motor verwendet. Jedoch hat dieser Elektromotor nur eine geringe Leistung und kann demzufolge nur eine geringe Last heben. Außerdem ist nur eine Einschaltdauer und somit nur eine Belastungszeit von etwa 40 % vorgesehen, da es sonst durch die bei Dauerbetrieb auftretenden Erwärmungen zu Zerstörungen kommen kann.

Es sind ölgekühlte Elektrotrommeln für Förderbänder bekannt, bei denen jedoch der Trommelmotor eine Kühlfüllung aus Öl aufweist, so daß auch die gesamten elektrischen und drehenden Teile in Öl eingetaucht sind. Dies ist jedoch nur bei vergleichsweise geringen Belastungen möglich.

Ebenso sind hiftgekühlte Motoren bekannt, wobei durch die Luftkühlung gewöhnlich nur eine vergleichsweise geringere Kühlleisdang erzielt werden kann.

Eine Winde mit einem luftgekühlten Motor, die die Merkmale des Oberbegriffs des Patentanspruchs 1 offenbart, ist aus DE-A-1 911 195 bekannt.

Der Erfindung liegt das technische Problem zugrunde, eine Seilwinde mit einem geeigneten Antriebsmechanismus vorzuschlagen, der insbesondere für größere Lastarforderungen geeignet ist und deshalb die Nachteile des Standes der Technik verringert.

Gelöst wird dieses technische Problem durch eine Seilwinde mit den im Anspruch 1 aufgeführten Merkmalen. Die Unteransprüche beziehen sich auf vorteilhafte Ausgestaltungen der Winde.

Die erfindungsgemäße Winde weist eine Seiltrommel auf, in welcher ein Asynchronmotor mit einem Kurzschlußläufer angeordnet ist. Dabei dient ein Frequenzumformer bzw. Frequenzumrichter zum Ansteuern bzw. Betreiben des Asynchronmotors. Weiterhin ist ein Planetengetriebe im wesentlichen koaxial zu dem Asynchronmotor angeordnet. Zum Kühlen des Asynchronmotors ist eine zwangsgeführte Flüssigkeits-Fremdkühlung vorgesehen. Weiterhin weist die Winde eine Haltebremse auf.

Durch die erfindungsgemäße Flüssigkeitskühlung des Asynchronmotors, die bevorzugt sowohl den Stator, als auch den Rotor direkt erfaßt, ist es aufgrund der wesentlich verbesserten Wärmeabfuhr möglich, die Leistung des Asynchronmotors gegenüber der herkömmlichen Ausführung mit Oberflächenluftkühlung etwa zu verdoppeln. Hierzu wird ein Kühlmedium der Flüssigkeits-Fremdkühlung für den Asynchronmotor durch einen zwangsgeführten Kühlkreislauf durch Rotor und Stator geführt.

Damit können verschiedene Vorteile der Winde erzielt werden. So kann durch die erfindungsgemäße Kühlung ein 45 kW-Motor so verwendet werden, daß ihm eine Leistung eines herkömmlichen 90 kW Motors abverlangt werden kann. Dadurch kann man bei einer bestimmten Leistungsanforderung entsprechend kleinere Motoren verwenden, den Elektromotor mit dem Planetengetriebe kompakt anordnen und insbesondere den Elektromotor und das Planetengetriebe komplett in die Winde integrieren. Bei der erfindungsgemäßen Winde kann des weiteren, bedingt durch die effektive Kühlung von Stator und Rotor, die Einschaltdauer bis zu 100% betragen.

Die Verwendung von Frequenzumrichtern ist weiterhin vorteilhaft und wirtschaftlich interessant, da aufgrund des hohen technischen Entwicklungsstandes der Betrieb des Antriebsmotors an diesem Frequenzumrichter eine präzise Einstellung der Windendrehzahl im gesamten interessierenden Drehzahlbereich zuläßt, und das volle Antriebsmoment bereits bei geringsten Drehzahlen verfügbar ist.

Gegenüber herkömmlichen hydrostatisch angetriebenen Winden ergibt sich als weiterer Vorteil eine kompakte Bauweise der erfindungsgemäßen Winde, da der bisher erforderliche große Elektromotor mit Verteilergetriebe, Hydraulikpumpen, Ölleitungen, Öldruckventilen, großem Öltank und Hydraulikmotor entfallen kann. Der direkte elektrische Antrieb am Planetengetriebe bewirkt, daß die gesamten hydraulischen Verluste an der Pumpe, als auch Leitungsverluste sowie Verluste am Ölmotor und Verteilergetriebe entfallen.

Die Verwendung von Frequenzumrichter-Steuerungen ist vorteilhaft, da der Elektromotor auch bei Drehzahlen bis ca. 4000 rpm betrieben werden kann. Dies hat zur Folge, daß die optimale Leistung bei einer vorgesehenen Seilgeschwindigkeit bei Vollast erzielt werden kann. Ebenso ist es auch möglich, hohe Seilgeschwindigkeiten für Teillast oder im Leerhakenbetrieb zu erzielen. Sollten extrem hohe Seilgeschwindigkeiten für Teillast- und Leerhakenbetrieb vorteilhaft sein, kann durch Umschalten des erfmdungsgemäßen Planetengetriebes auf eine kleinere Übersetzung die Seiltrommeldrehzahl stark erhöht werden. Diese Umschaltung kann auch mit hängender Last im Stillstand erfolgen, da die Haltebremse im direkten Kraftfluß formschlüssig über das Planetengetriebe, unabhängig von dem Schaltmechanismus, mit der Seiltrommel verbunden bleibt. Folglich können mit dem Einsatz der erfindungsgemäßen Winde in einem Kran schnelle Umschlagzyklen erzielt werden.

Durch den verbesserten Wirkungsgrad der Winde können weiterhin Energiekosten eingespart werden.

Im Vergleich zu herkömmlichen Hydraulikwinden mit einer installierten Hochdruckhydraulik ist die Verschmutzungsgefahr durch die erfmdungsgemäße Elektrowinde nicht so hoch, da für das Kühlmedium nur geringe Drücke erforderlich sind. Dies ist insbesonders von großem Vorteil beim Umschlagen von z.B. Nahrungsmitteln.

Es ist vorteilhaft, die Winde so auszustalten, daß das Kühlmedium der Flüssigkeits-Fremdkühhmg nicht in Kontakt mit den elektrisch aktiven Teilen des Asynchronmotors kommt, was bei auftretenden größeren Spannungen zu Problemen führen kann.

Ebenso ist es vorteilhaft, daß die zwangsgeführte Flüssigkeits-Fremdkühlung eine serielle Kühlung sowohl für den Stator als auch für den Rotor des Asynchronmotors liefert, so daß effektiv und wirtschaftlich die Verlustwärme vom stationären sowie vom rotierenden Teil des Motors abgeführt werden kann.

Bevorzugt wird als flüssiges Kühlmedium Öl verwendet. Hierdurch ist es möglich, daß die Welle des Rotors des Asynchronmotors auf Wälzlagern gelagert ist, welche durch das flüssige Kühlmedium, nämlich Öl, geschmiert werden. Natürlich können auch andere Kühlmedien, wie z.B. Wasser oder andere Flüssigkeiten mit ausreichender Wärmekapazität verwendet werden.

Es ist vorteilhaft, die Winde so auszubilden, daß die Welle des Rotors des Asynchronmotors als eine Hohlwelle ausgebildet ist, die von dem flüssigen Kühlmedium durchströmt wird. Somit kann auch diese Welle durch das Kühlmedium gekühlt werden.

Bevorzugt ist in der Hohlwelle des Rotors ein massives Rohr mit einer Außenwendel aus einem wärmeleitfähigen Werkstoff ausgebildet, wobei der wärmeleitfähige Werkstoff insbesondere Kupfer ist. Natürlich sind auch hier verschiedene andere Alternativen denkbar, wie z.B. Eisen oder bestimmte Stahlsorten. Die Aussparungen der Außenwendel zwischen der Hohlwelle und dem massiven Rohr können dann von dem flüssigen Kühlmedium durchströmt werden, um so eine wirksame Kühlung zu erzielen.

Weiterhin ist es vorteilhaft, die Winde so auszugestalten, daß das flüssige Kühlmittel auch zur Schmierung der inneren Stützlagerung dient.

Bei einer Ausführungsform ist die Haltebremse als eine hydraulisch belüftete Lamellenbremse, insbesondere eine Federdruck-Lamellenbremse, ausgebildet, die bevorzugt auf der Antriebswelle des Planetengetriebes angeordnet ist. Alternativ ist es auch denkbar, z.B. eine Magnetbremse vorzusehen, wobei jedoch auch andere Bremsen zur Verwendung bei der erfindungsgemäßen Winde in Frage kommen können. Die Haltebremse wird bevorzugt auf der von dem Asynchronmotor abgewandten Seite des Planetengetriebes angeordnet. Dadurch, daß die hydraulische belüftete Federdruck-Lamellenbremse gegenüber dem Elektromotor auf der äußeren Seite angeordnet ist, ist diese Haltebremse für den Anschluß an die Hydraulik sowie für Wartungszwecke platzgünstig angeordnet, da sie so leicht zugänglich ist.

Bevorzugt ist bei der Winde ein Inkremental-Geber zur Übertragung der festgestellten Drehzahl der Winde an die Steuerung des Frequenzumrichters bzw. Frequenzumformers vorgesehen. Dieser Inkremental-Geber liegt vorteilhaft im inneren Bereich der Haltebremse, bevorzugt auf der Antriebswelle des Planetengetriebes. Soll in diesem Bereich ein Flansch für eine Gelenkwelle angebracht werden, wird der Inkrementalgeber mit einem Radsatz achsversetzt angeordnet.

Es ist vorteilhaft, daß der Asynchronmotor ein doppelwandiges Gehäuse mit einem wendelförmigen Kühlkanal aufweist. Der D-seitige Lagerschild des Asynchronmotors weist vorteilhaft einen Kühlkanal auf, welcher eine Verbindung zwischen dem Kühlkanal in der Welle und dem Kühlkanal in dem doppelwandigen Gehäuse herstellt.

Ebenso vorteilhaft weist der N-seitige Lagerschild einen Kühlkanal für die Zuleitung und/oder die Ableitung des flüssigen Kühlmediums auf. Dadurch kann ein Kühlkreislauf zur Kühlung des Motors durch das Kühlmedium geschaffen werden.

Es ist vorteilhaft, den N-seitigen Lagerschild des Asynchronmotors so auszugestalten, daß er als Tragelement für die Seiltrommel-Lagerung dient. Insbesondere ist er mit dem Windenbock verschraubt.

Die Unterbringung des Elektromotors in der Seiltrommel ist bevorzugt somit so gestaltet, daß das Gehäuse zum Abstützen des Drehmomentes am Windenbock zugleich Lagerzapfen für die Lagerung der Seiltrommel selbst ist. An der inneren Seite dient ein Wälzlager auf dem Elektromotor zur Abstützung auf dem äußeren Mantel des Planetengetriebes, der mit der Seiltrommel verbunden ist.

Es ist vorteilhaft, das flüssige Kühlmedium in einem Kreislauf mit einem Wärmetauscher zu führen. Dabei weist der Wärmetauscher vorteilhaft eine Pumpe und ein von einem Lüfter gekühltes Wärmetauscherelement auf.

Bevorzugt dient das flüssige Kühlinedium auch zur Betätigung der Haltebremse, insbesondere einer Lamellenbremse.

Der Kühlmedium-Kreislauf weist vorteilhaft mindestens einen Druckspeicher zum Aufbau des Druckes für die Betätigung der Haltebremse der Winde auf.

Bevorzugt weist der Wärmetauscher wenn erforderlich mindestens zwei Wärmetauscherelemente für die Kühlung des Planetengetriebes und des Asynchronmotors auf.

Es ist vorteilhaft, die Winde so auszugestalten, daß ein Schrank für die Aufnahme der elektronischen Komponenten in den Windenbock integriert ist. Damit stellt die Winde mit integriertem Elektromotor und einem Frequenzumrichter eine in sich komplette Antriebseinheit dar. Hierdurch ist für den praktischen Gebrauch ein erheblich geringerer Montageaufwand als bei den herkömmlichen Winden erforderlich, da sowohl die mechanischen und hydraulischen als auch die elektrischen Elemente einfach montiert werden können.

Bevorzugt werden in einem verbleibenden Zwischenraum zwischen dem Elektromotor und/oder dem Planetengetriebe auf der einen Seite und der Seiltrommel auf der anderen Seite schallisolierende Dämmaterialien angeordnet, so daß die Geräuschentwicklung der Winde erheblich verringert werden kann.

Es ist vorteilhaft, die Winde so auszugestalten, daß diese einfach mit seitlichen Haltelementen zur Abstützung bzw. Aufnahme von Seillast und Reaktionsmoment, wie z.B. Blechen, durch Bolzen oder Verschrauben verbunden werden kann. Somit kann die Winde als eine komplette einbaufertige Einheit ausgebildet werden, so daß z.B. ein Kran, in welchem diese Winde verwendet wird, in seiner Stahlbaukonstruktion vereinfacht wird.

Bevorzugt ist ein Sonnenrad einer Antriebsstufe eines Planetengetriebes der Winde zur Änderung der Gesamtübersetzung durch einen Zylinder in axialer Richtung verschiebbar und kann wahlweise mit Planetenrädern der ersten Planetenstufe oder mit einem freien Glied der Planetenstufe formschlüssig verbunden werden, um eine um den Stufensprung der ersten Planetenstufe reduzierte Gesamtübersetzung des Planetengetriebes zu bewirken.

Es ist weiterhin möglich den Inkrementalgeber über ein Radsatz achsversetzt am vorderen Ende der Haltebremse anzuordnen. Dadurch kann ein Flansch am vorderen Ende der Haltebremse angebaut werden, wobei mit diesem Flansch eine in etwa in gleicher Achse spiegelbildlich angeordnete zweite komplette Winde über eine Gelenkwelle verbunden bzw. mechanisch synchronisiert werden kann.

Vorteilhaft ist das Sonnenrad einer mittleren Planetenstufe des Planetengetriebes der Winde mit der Haltebremse verbunden und am Ende dieser Wellenverbindung ist ein Flansch für den Anschluß einer Gelenkwelle eingeordnet.

Die Erfindung wird nachfolgend anhand von Ausführungsbeispielen unter Bezugnahme auf die beiliegenden Zeichnungen erläutert. Es zeigen:
- Fig. 1a: eine schematische Querschnittsansicht einer erfindungsgemäßen Winde;
- Fig. 1b: eine schematische Querschnittsansicht einer erfindungsgemäßen schaltbaren Winde
- Fig. 2: ein erstes Beispiel für einen Kreislauf des Kühlmediums;
- Fig. 3: ein zweites Beispiel für einen Kreislauf des Kühlmediums;
- Fig. 4: eine perspektivische Ansicht der Winde; und
- Fig. 5: ein Ausführungsbeispiel mit zwei Winden in einem Windenbock.

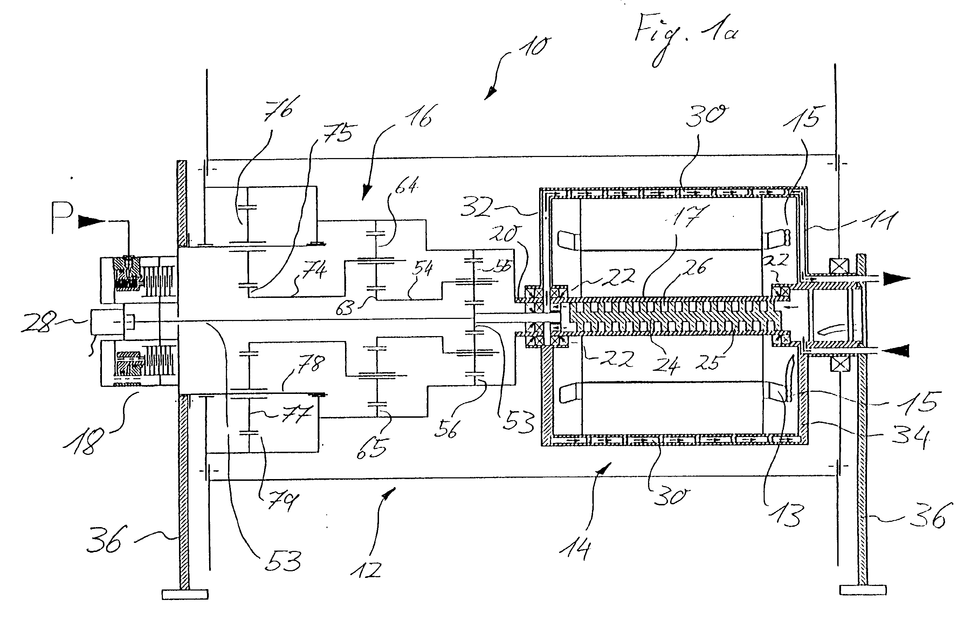

Wie aus Fig. 1a ersichtlich, ist bei der Winde 10 eine Seiltrommel 12 zwischen zwei Windenböcken 36 angeordnet. Die Seiltrommel 12 ist drehbar in den Windenböcken 36 gelagert und weist in ihrem Inneren ein Planetengetriebe-16 und einen Drehstrom-Asynchronmotor 14 auf. Dabei wird das Planetengetriebe 16 von dem Drehstrom-Asynchronmotor 14 angetrieben, welcher auf einer Seite fest mit dem Windenbock 36 verbunden ist.

Der Asynchronmotor 14 treibt über seine Antriebswelle 17 ein Sonnenrad 53 des Planetengetriebes 16 an.

Das Sonnenrad 53 der Antriebsplanetenstufe wird zentral durch das Planetengetriebe 16 bis zur Haltebremse 18 hindurchgeführt. Sonnenrad 53, Steg 54, Planetenräder 55 und Hohlrad 56 bilden zusammen die erste Planetenstufe; Sonnenrad 63, Steg 74, und Planetenräder 64 und Hohlrad 65 bilden zusammen die zweite Planetenstufe; Sonnenrad 75, Steg 78, Planetenräder 76 und Hohlrad 79 bilden zusammen die dritte Stufe des Planetengetriebes 16. Die Hohlräder 56, 65 und 79 sind zu einem umlaufenden Gehäuse miteinander gekoppelt und mit der Seiltrommel 12, z.B. durch Verschrauben drehfest verbunden.

Der Steg 78 der Abtriebsplanetenstufe ist z.B. durch Verschrauben drehfest mit dem Windenbock 36 zur Abstützung des Reaktionsmomentes verbunden.

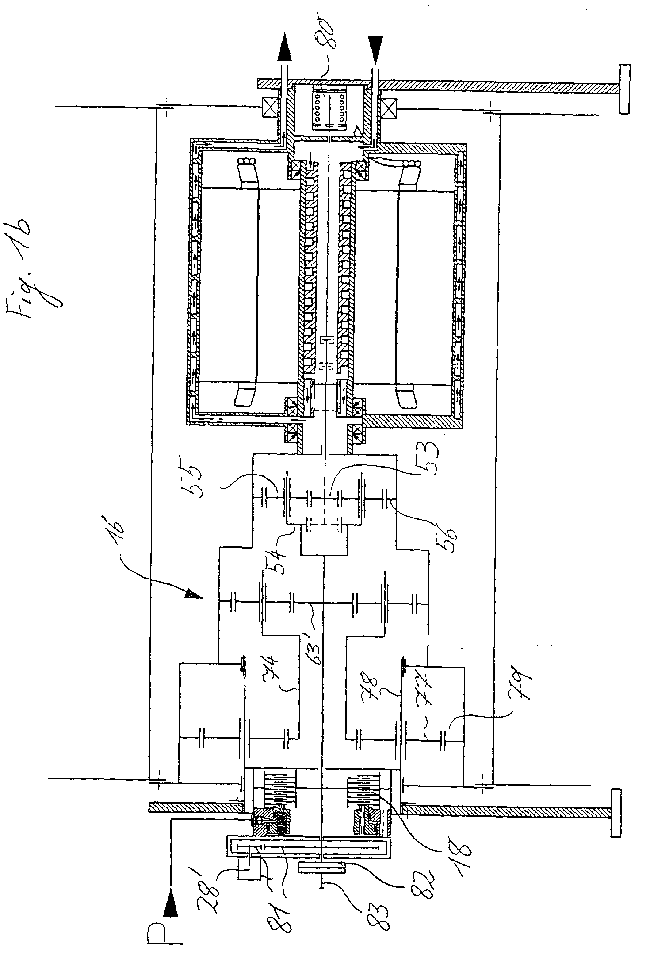

Wie in Fig. 1b dargestellt, ist eine alternative Ausführungsform des Planetengetriebes 16 ein durch einen Zylinder so verschiebbares Sonnenrad 63' der Antriebsplanetenstufe. Ist das Sonnenrad 63' mit den Planetenrädern 55 im Eingriff, hat das Planetengetriebe 16 die größte Übersetzung für den Vollastbetrieb. Wird das Sonnenrad 63' durch Betätigung des Zylinders 80 aus dem Eingriff mit den Planetenrädern 55 gebracht und mit dem freien Glied 54 oder 56 der Planetenstufe formschlüssig verbunden, wird eine um den Stufensprung der ersten Planetenstufe reduzierte Gesamt-Übersetzung des Planetengetriebes 16 wirksam. In dieser Stellung kann für den Teillast- und Leerhakenbetrieb eine sehr hohe Seilgeschwindigkeit erreicht werden. Bei dieser alternativen Ausführungsform nach Fig. 1b des Planetengetriebes 16 ist das Sonnenrad 63' mit der Haltebremse 18 verbunden. Der über einen Radsatz 81 achsversetzt angeordnete Inkrementalgeber 28 gestattet den Anbau eines Flansches 82 am vorderen Ende der Haltebremse 18. Mit diesem Flansch 82 kann eine in etwa gleicher Achse spiegelbildlich angeordnete zweite komplette Winde über eine Gelenkwelle 83 verbunden bzw. mechanisch synchronisiert werden. Solche spiegelbildlich angeordneten und im Antriebsstrang mechanisch verbundenen Winden werden bevorzugt bei Containerkranen verwendet.

Der Drehstrommotor 14 ist auf der inneren Seite auf einem Gehäuse 20 des Planetengetriebes gelagert und von einem doppelwandigen Gehäuse 30 mit einem D-seitigen Lagerschild 32 und einem N-seitigen Lagerschild 34 umgeben, durch welche, wie durch die Pfeile angedeutet, ein Kühlmedium strömen kann. Dabei weist das Gehäuse 30 einen wendelförmigen Kühlkanal auf.

Der N-seitige Lagerschild 34, der auf der dem Planetengetriebe 16 abgewandten Seite des doppelwandigen Gehäuses 30 angeordnet ist, ist somit so ausgebildet, daß ein Kühlmedium hindurchströmen kann. Weiterhin ist der N-seitige Lagerschild 34 mit dem Windenbock 36 verschraubt und dient somit als Tragelement für die Seiltrommel-Lagerung. In dem D-seitigen Lagerschild 32, der auf der gegenüberliegenden Seite des doppelwandigen Gehäuses 30 zu dem N-seitigen Lagerschild 34 angeordnet ist, fließt ebenfalls ein Kühlmedium. Wie aus Fig. 1 ersichtlich, weisen der D-seitige Lagerschild 32 und der N-seitige Lagerschild 34 Zu-bzw. Ableitungen für das Kühlmedium zu dem Gehäuse 30 auf, das dann durch das doppelwandige Gehäuse 30 von dem D-seitigen Ende des doppelwandigen Gehäuses 30 zu dem N-seitigen Ende strömt. Wie rechts in Fig. 1 durch die dicken Pfeile angedeutet, wird das Kühlmedium auf der dem Planetengetriebe 16 abgewandten Seite des Drehstrom-Asynchronmotors 14 zu- bzw. abgeführt. Die Zu- bzw. Ableitungen des Kühlmediums sind im Bereich der Drehachse parallel zu dieser versetzt angeordnet. Das eingeleitete Kühlmedium tritt, wie aus den Pfeilen in Fig. 1 ersichtlich, in die Hohlwelle 17 ein, welche auf beiden Seiten Wälzlager 22 aufweist. In der Hohlwelle 17 ist ein Massivrohr 24 aus Kupfer mit einer Außenwendel 25 angeordnet, welche verschiedene Aussparungen 26 aufweist. Durch diese Aussparungen 26 der Außenwendel 25 strömt das eingeleitete Kühlmedium auf einer wendelförmigen Bahn, um so das Massivrohr 24 und damit auch die Hohlwelle 20 zu kühlen. Auf der dem Planetengetriebe 16 zugewandten Seite des Massivrohres 24 tritt das Kühlmedium aus der Außenwendel 25 aus und wird durch das D-seitige Lagerschild 32 radial nach außen zu dem doppelwandigen Gehäuse 30 geführt, so daß es wieder zurück durch das doppelwandige Gehäuse 30 und das N-seitige Lagerschild 34 nach außen geführt wird. Somit werden Stator und Rotor des Asynchronmotors 14 seriell gekühlt.

Innerhalb des Drehstrom-Asynchronmotors 14 ist das bewickelte Statorpaket 13 erkennbar, das Ableitungen 15 aufweist. Somit kommt das zwangsgeführte Kühlmedium nicht in Kontakt mit den elektrisch aktiven Teilen des Drehstrom-Asynchronmotors 14.

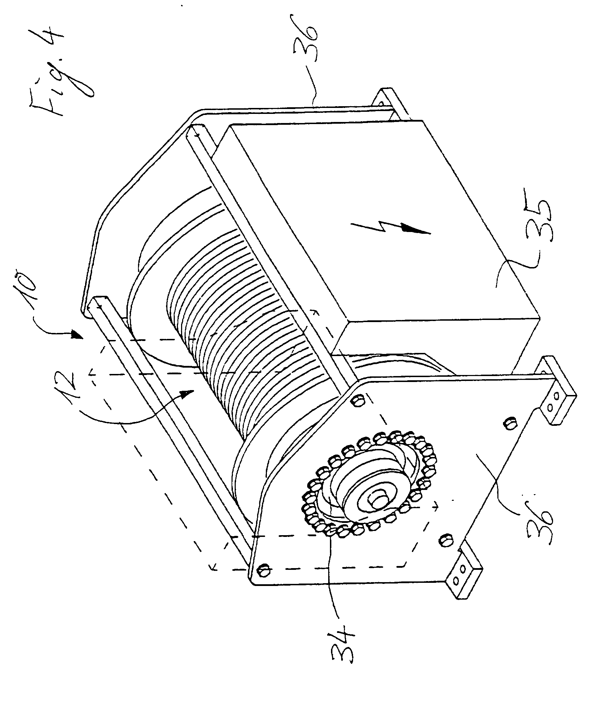

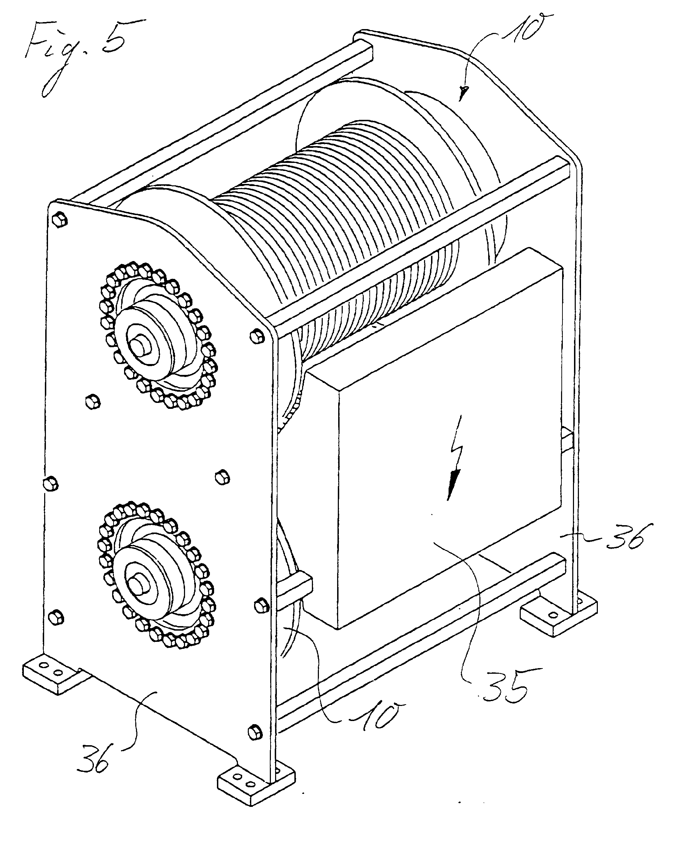

Der Drehstrom-Asynchronmotor 14 treibt über seine Abtriebswelle 17 an der dem rechten Windenbock 36 gegenüberliegenden Seite das Planetengetriebe 16 an, über welches die Seiltrommel 12 der Winde 10 angetrieben wird. Auf der dem Drehstrom-Asynchronmotor 14 gegenüberliegenden Seite des Planetengetriebes 16 ist ein Inkremental-Geber 28 zur Übertragung der Drehzahl an die Steuerung des Frequenzumformers bzw. Frequenzumrichters, untergebracht im Schaltschrank 35, wie aus Fig. 4 und 5 ersichtlich, vorgesehen. Dieser Inkremental-Geber 28 ist auf der Abtriebswelle des Planetengetriebes 16 angeordnet.

Ebenso ist eine Haltebremse 18 auf der von dem Drehstrom-Asynchronmotor 14 abgewandten Seite des Planetengetriebes 16 vorgesehen. Diese Haltebremse 18 ist als hydraulisch belüftete Federdruck-Lamellenbremse ausgebildet und ebenfalls auf der Antriebswelle des Planetengetriebes 16 angeordnet. Über das mit "P" gekennzeichnete Ansteuerelement kann die Haltebremse 18 mit Hydraulikdruck gelüftet werden. Die Federdruck-Lamellenbremse schließt über Federkraft und hält die Welle des Planetengetriebes 16 fest. Das flüssige Kühlmittel wird auch zur Betätigung der Lamellenbremse verwendet.

Wird als flüssiges Kühlmedium Öl verwendet, so können mit diesem Kühlmedium die Wälzlager 22, die die Welle 17 des Rotors des Asynchronmotors 14 lagern, geschmiert werden. Ebenso kann die innere Stützlagerung am Gehäuse 20 mit dem als flüssiges Kühlmedium verwendeten Öl geschmiert werden. Dabei wird das Kühlmedium jedoch so geführt, daß es nicht in Kontakt mit den elektrisch aktiven Teilen des Drehstrom-Asynchronmotors 14 kommt, indem es vom äußeren Wälzlager 22 durch die Welle 17 des Rotors des Drehstrom-Asynchronmotors 14 zu dem inneren Wälzlager 22, durch den Kühlkanal des D-seitigen Lagerschilds 32, den wendelförmigen Kühlkanal des doppelwandigen Gehäuses 30 und den Kühlkanal des N-seitigen Lagerschilds 34 wieder nach außen geleitet wird.

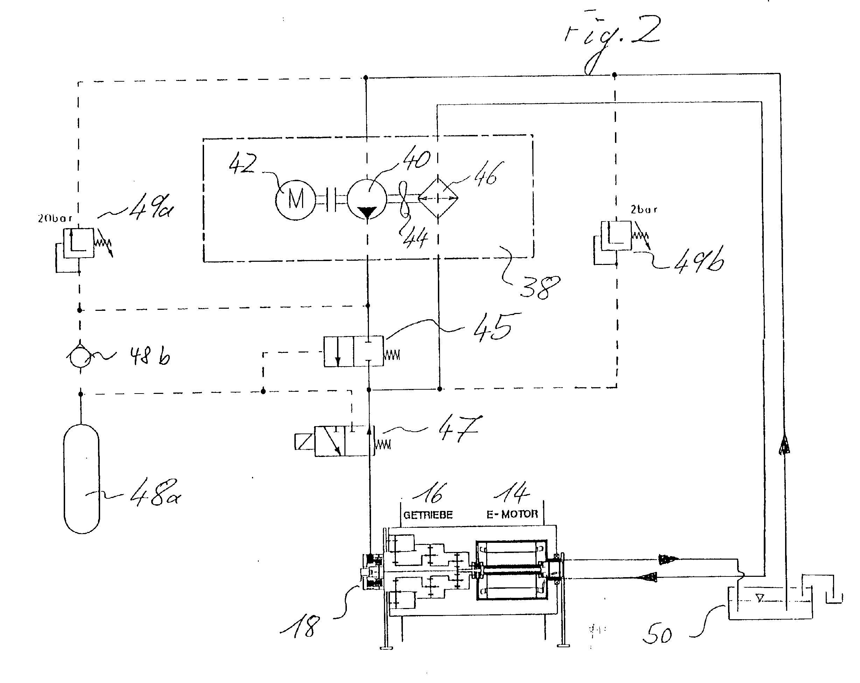

Fig. 2 zeigt ein erstes Beispiel eines Kreislaufes für das Kühlmedium. Die Pumpe 40 und der Wärmetauscher 46 bilden zusammen mit einem Lüfter 44, welcher den Wärmetauscher 46 mit Luft durchströmt, und einem Motor 42 für die Pumpe 40 und/oder den Lüfter 44 ein Kühlaggregat 38. Das Kühlmedium wird von der Pumpe 40 aus einem entlüfteten Tank 50 angesaugt, durch den Wärmetauscher 46 und durch den Drehstrom-Asynchronmotor 14 wieder zurück zum Tank 50 gepumpt. Das flüssige Kühlmedium wird somit ständig in einem Kreislauf zwischen dem Elektromotor 14 und dem Kühlaggregat 38 geführt.

Das Umschaltventil 45, das Magnet-Betätigungsventil 47, der Druckspeicher 48a, das Rückschlagventil 48b und das Überdruckventil 49a dienen zur Aufrechterhaltung eines Mindestschaltdruckes von z.B. 12 bar und eines Maximalschaltdruckes von z.B. 18 bar zur Betätigung der Haltebremse 18 am Anschluß P, wie in Fig. 1a und 1b gezeigt. Sobald der Druck im Druckspeicher 48a z.B. unter 12 bar abfällt, wird das Umschaltventil 45 wie gezeichnet automatisch mit Federkraft geschlossen und die Pumpe 40 fördert über das Rückschlagventil 48b kurzzeitig das Öl in den Druckspeicher 48a. Wenn z.B. 18 bar erreicht sind, öffnet das Umschaltventil 45 wieder, die Flüssigkeit kann von der Pumpe 40 wieder drucklos über den Wärmetauscher 46 und den Elektromotor 14 zum Tank 50 gefördert werden. Das Rückschlagventil 48b sperrt den Flüssigkeitsdruck im Druckspeicher.

Ein Signal aus der elektrischen Steuerung des Motors 14 öffnet und schließt das Magnet-Betätigungsventil 45 zur Aussteuerung der Haltebremse 18. Das Überdruckventil 49b dient lediglich zur Absicherung des quasi drucklosen Flüssigkeits-Kreislaufes.

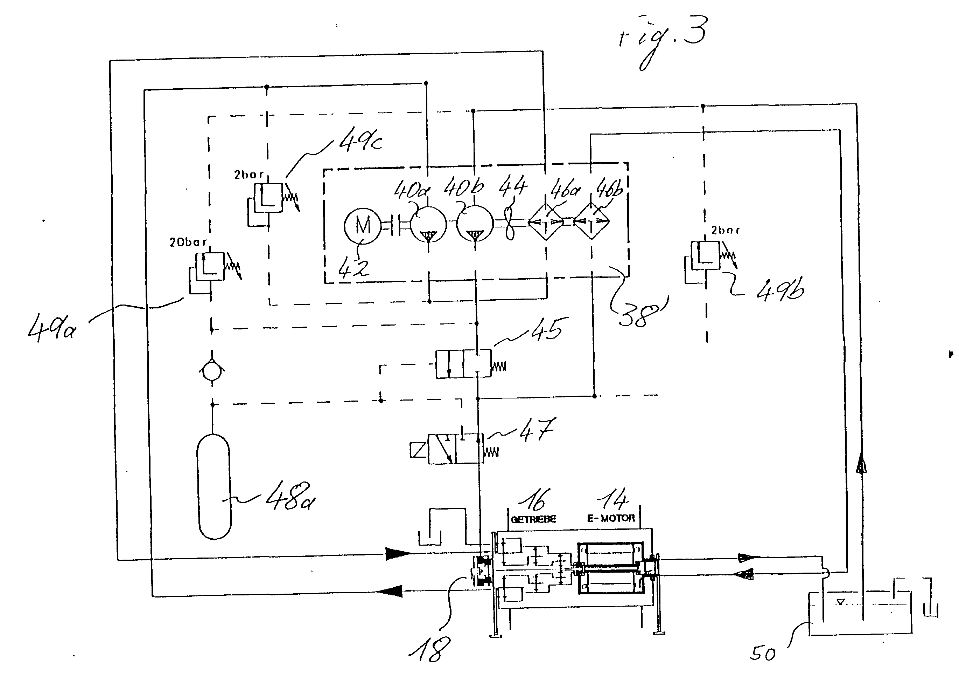

Fig. 3 zeigt eine alternative Ausführungsform zweier vollständig getrennter Kreisläufe gleicher oder unterschiedlicher Flüssigkeitsmedien. Dabei sind im Unterschied zu dem in Fig. 2 gezeigten Kreislauf zwei Wärmetauscher 46a und 46b vorgesehen, die der Kühlung der flüssigen Kühlmedien dienen, welche getrennt dem Planetengetriebe 16 und Elektromotor 14 zugeführt werden. Entsprechend weist das Kühlaggregat 38' auch zwei Pumpen 40a und 40b auf. Wie in Fig. 3 gezeigt, werden die Pumpen 40a und 40b sowie der Lüfter 44 zum Kühlen der Wärmetauscher 46a und 46b von einem Motor 42 angetrieben. Für den Wärmetauscher 46a ist ein weiteres Überdruckventil 49c vorgesehen.

Wie aus Fig. 4 ersichtlich, ist der N-seitige Lagerschild 34 des Drehstrom-Asynchronmotors 14 mit dem Windenbock 36 als Tragelement für die Seiltrommel-Lagerung verschraubt. Ein Schrank 35 für die Aufnahme der elektronischen Komponenten ist in den Windenbock 36 integriert, nämlich in dem Raum zwischen den beiden Windenböcken 36 untergebracht. Der Schrank 35 kann auch an der gegenüberliegenden Seite der Seiltrommel 12 angeordnet sein, wie durch die gestrichelten Linien gezeigt.

Fig. 5 zeigt eine Ausführungsform mit zwei Winden 10 in einem Windenbock 36, wobei jede der Winden 10 wie oben beschrieben ausgestaltet sein kann. Die beiden Winden 10 können unabhängig voneinander betrieben werden, indem die zugehörigen, in ihrem Inneren untergebrachten Elektromotoren entsprechend angesteuert werden.

## Patentansprüche

1. Winde mit:
a) einer Seiltrommel (12);
b) einem in der Seiltrommel (12) angeordneten Motor (14);
c) einem im wesentlichen koaxial zu dem Motor (14) angeordneten Planetengetriebe (16);
d) einer Haltebremse (18); und
**gekennzeichnet durch** den als Asynchronmotor mit Kurzschlußläufer (13) ausgebildeten Motor (14) und
einen Frequenzumformer bzw. Frequenzumrichter zum Ansteuern bzw. Betreiben des Asynchronmotors (14).
e) einer zwangsgeführten Flüssigkeits-Fremdkühlung (11) zum Kühlen des Motors (14);

2. Winde nach Anspruch 1, **dadurch gekennzeichnet, daß** das Kühlmedium der Flüssigkeits-Fremdkühlung (11) nicht in Kontakt mit den elektrisch aktiven Teilen des Asynchronmotors (14) kommt.

3. Winde nach einem der vorhergehenden Ansprüche, **dadurch gekennzeichnet, daß** die zwangsgeführte Flüssigkeits-Fremdkühlung (11) eine serielle Kühlung für den Stator und für den Rotor des Asynchronmotors (14) aufweist.

4. Winde nach einem der vorhergehenden Ansprüche, **dadurch gekennzeichnet, daß** als flüssiges Kühlmedium Öl verwendet wird.

5. Winde nach Anspruch 4, **dadurch gekennzeichnet, daß** die Welle (17) des Rotors des Asynchronmotors (14) auf Wälzlagern (22) gelagert ist, die durch das flüssige Kühlmedium geschmiert werden.

6. Winde nach einem der vorhergehenden Ansprüche, **dadurch gekennzeichnet, daß** die Welle (17) des Rotors des Asynchronmotors (14) als Hohlwelle ausgebildet ist, die von dem flüssigen Kühlmedium durchströmt wird.

7. Winde nach Anspruch 6, **dadurch gekennzeichnet, daß** in der Hohlwelle (17) des Rotors ein Massiv-Rohr (24) mit Außenwendel (25) aus einem wärmeleitfähigen Werkstoff, insbesondere Kupfer, angeordnet ist, wobei die Aussparungen (26) der Außenwendel (25) zwischen der Hohlwelle (17) und dem Massiv-Rohr (24) von dem flüssigen Kühlmedium durchströmt werden.

8. Winde nach einem der Ansprüche 4 bis 7, **dadurch gekennzeichnet, daß** die innere Stützlagerung mit dem flüssigen Kühlmedium geschmiert wird.

9. Winde nach einem der vorhergehenden Ansprüche, **dadurch gekennzeichnet, daß** die Haltebremse (18) als hydraulisch gelüftete Federdruck-Lamellenbremse ausgebildet ist, die auf der Antriebswelle des Planetengetriebes (16) angeordnet ist.

10. Winde nach einem der Ansprüche 1 bis 8, **dadurch gekennzeichnet, daß** die Haltebremse (18) als Magnetbremse ausgebildet ist.

11. Winde nach einem der vorhergehenden Ansprüche, **dadurch gekennzeichnet, daß** das flüssige Kühlmedium in einem geschlossenen Kreislauf mit einem Kühlaggregat (38, 38') geführt ist.

## Claims

1. A winch, comprising:
a) a cable drum (12);
b) a motor (14) arranged in the cable drum (12);
c) a planetary gear (16) arranged substantially co-axially with respect to the motor (14);
d) a stop brake (18); and
e) a ducted liquid blast cooling system (11) for cooling the motor (14);
**characterised by** the motor (14) formed as an asynchronous motor with a short-circuit rotor (13) and a frequency converter for controlling or operating the asynchronous motor (14).

2. The winch according to claim 1, **characterised in that** the cooling medium of the liquid blast cooling system (11) does not come into contact with the electrically active parts of the asynchronous motor (14).

3. The winch according to any one of the preceding claims, **characterised in that** the ducted liquid blast cooling system (11) comprises a serial cooling system for the stator and the rotor of the asynchronous motor (14).

4. The winch according to any one of the preceding claims, **characterised in that** oil is used as the liquid cooling medium.

5. The winch according to claim 4, **characterised in that** the shaft (17) of the rotor of the asynchronous motor (14) is mounted on rolling bearings (22) which are lubricated by the liquid cooling medium.

6. The winch according to any one of the preceding claims, **characterised in that** the shaft (17) of the rotor of the asynchronous motor (14) is formed as a hollow shaft through which the liquid cooling medium flows.

7. The winch according to claim 6, **characterised in that** a solid pipe (24) with an outer helix (25) made of a heat-conductive material, in particular copper, is arranged in the hollow shaft (17) of the rotor, wherein the liquid cooling medium flows through the cavities (26) of the outer helix (25) between the hollow shaft (17) and the solid pipe (24).

8. The winch according to any one of claims 4 to 7, **characterised in that** the inner support bearing is lubricated with the liquid cooling medium.

9. The winch according to any one of the preceding claims, **characterised in that** the stop brake (18) is formed as a hydraulically discharged spring-loaded multiple disc brake which is arranged on the drive shaft of the planetary gear (16).

10. The winch according to any one of claims 1 to 8, **characterised in that** the stop brake (18) is formed as a magnetic brake.

11. The winch according to any one of the preceding claims, **characterised in that** the liquid cooling medium is guided in a closed circuit by a cooling unit (38, 38').

## Revendications

1. Treuil comportant :
a) un tambour de câble (12) ;
b) un moteur (14) disposé dans le tambour de câble (12) ;
c) un engrenage planétaire (16) disposé sensiblement coaxialement au moteur (14) ;
d) un frein d'arrêt (18) ;
e) et un refroidissement externe à liquide (11) à guidage forcé pour refroidir le moteur (14)
**caractérisé par** un moteur (14) réalisé en tant que moteur asynchrone avec rotor en court-circuit (13), et un transformateur de fréquence ou changeur de fréquence pour commander ou faire fonctionner le moteur asynchrone (14).

2. Treuil selon la revendication 1, **caractérisé en ce que** le fluide de refroidissement du refroidissement externe à liquide (11) ne vient pas en contact avec les parties électriquement actives du moteur asynchrone (14).

3. Treuil selon l'une des revendications précédentes, **caractérisé en ce que** le refroidissement externe à liquide (11) à guidage forcé comporte un refroidissement série pour le stator et pour le rotor du moteur asynchrone (14).

4. Treuil selon l'une des revendications précédentes, **caractérisé en ce qu'**on utilise de l'huile comme fluide de refroidissement liquide.

5. Treuil selon la revendication 4, **caractérisé en ce que** l'arbre (17) du rotor du moteur asynchrone (14) est monté sur des paliers de roulement (22) qui sont lubrifiés par le fluide de refroidissement liquide.

6. Treuil selon l'une des revendications précédentes, **caractérisé en ce que** l'arbre (17) du rotor du moteur asynchrone (14) est réalisé sous la forme d'un arbre creux qui est traversé par le fluide de refroidissement liquide.

7. Treuil selon la revendication 6, **caractérisé en ce que** dans l'arbre creux (17) du rotor est disposé un tube massif (24) avec hélice externe (25) constituée d'un matériau thermoconducteur, en particulier du cuivre, les découpes (26) de l'hélice externe (25), entre l'arbre creux (17) et le tube massif (24), étant traversées par le fluide de refroidissement liquide.

8. Treuil selon l'une des revendications 4 à 7, **caractérisé en ce que** les paliers de soutien intérieurs sont lubrifiés avec le fluide de refroidissement liquide.

9. Treuil selon l'une des revendications précédentes, **caractérisé en ce que** le frein d'arrêt (18) est réalisé en tant que frein à disques multiples à pression de ressort, à desserrage hydraulique, qui est disposé sur l'arbre d'entraînement de l'engrenage planétaire (16).

10. Treuil selon l'une des revendications 1 à 8, **caractérisé en ce que** le frein d'arrêt (18) est réalisé en tant que frein magnétique.

11. Treuil selon l'une des revendications précédentes, **caractérisé en ce que** le fluide de refroidissement liquide est guidé dans un circuit fermé avec un groupe de refroidissement (38, 38').
